# EUROPEAN PATENT APPLICATION

(11) **EP 1 930 109 A2**
(43) Date of publication of application: **11.06.2008**
(21) Application number: 07254655.9
(22) Date of filing: 30.11.2007
(51) Int. Cl.: B23C 5/28, B23C 5/22, B23C 5/02, B23C 3/18

(54) **Cup-shaped milling cutter for airfoils**

(30) Priority: 05.12.2006 US 566827
(71) Applicant: Pratt & Whitney Canada Corp., Longueuil QC J4G 1A1 (CA)
(72) Inventor: Sasu, Ioan, Brossard Quebec J4W 2M3 (CA); Turcotte, Bertrand, Ste-Julie Quebec J3E 2S3 (CA)
(74) Representative: Leckey, David Herbert

(57) **Abstract**

A cup milling cutter (20) for machining an integrated bladed rotor (50) is provided with a plurality of cutting inserts (30) removably attached to a cup shaped body (22) to form a virtual cutting ring (32) about an axis of rotation (28) at the open end of the cup shaped body (22) when the cup shape body (22) is rotated by a drive spindle (26). The virtual cutting ring (32) has outer and inner diameter cutting edges (34,36) and a middle cutting edge (38) therebetween. The virtual cutting ring (32) is sized in a width greater than the thickness of the open end of the cup shaped body (22) to permit the virtual cutting ring (32) in a multi-axis simultaneous motion, to machine the airfoils (52) of the integrated bladed rotor (50) using the respective cutting edges (34,36,38) without any interference.

## Description

### TECHNICAL FIELD

The invention relates generally to gas turbine engines, and more particularly, to an improved cup milling cutter for machining an integral rotor blade disc.

### BACKGROUND OF THE ART

Integrally Bladed Rotors (IBR's), also commonly known as bladed discs (blisks) are important parts of gas turbine engines. An IBR comprises a hub and a plurality of integral blades projecting substantially radially outwardly therefrom. Manufacturing all IBR's is a challenging task due to the complex geometry of airfoil surfaces. Existing methods of manufacturing IBR airfoils include flank milling, point milling, and use of grinding wheels. In a flank milling process, the periphery of an end mill, typically a tapered ball-end mill, generates the desired airfoil surface geometry through one or a few passes of the cutter. In a point milling process, a similar grinder makes numerous (usually hundreds) of shallow passes until the desired airfoil surface geometry is generated. These passes may be in the direction of airflow, or in the radial direction. Another existing method of manufacturing IBR airfoils is to successively plunge into the rotor with a cup-shaped cutter, thereby generating circular slots between the airfoils. This method is limited to either roughing in complex geometry airfoils or completely machining very simple geometry airfoils. The tool used in a point milling process is usually a tapered end-mill style cutter, small enough such that the entire diameter of the tool can fit between the airfoils of the IBR. Cutting speed is limited due to the small diameter of the tool, which restricts production efficiency.

Accordingly, there is a need to provide an improved cup milling cutter for machining IBR airfoils.

### SUMMARY OF THE INVENTION

It is therefore an object of this invention to provide cup milling cutter and a method using same for machining IBR airfoils in a roughing, semi-finishing and/or finishing process.

In one aspect the present invention provides a cup milling cutter for machining a rotor having a disc and a plurality of integral airfoils projecting outwardly from the disc, which comprises a cup shaped body attachable to a drive spindle of a milling machine for rotation about an axis of the drive spindle; a plurality of cutting inserts removeably attached to the cup shaped body to form a virtual cutting ring about the axis of rotation at an open end of the cup shaped body when the cup shaped body is rotated by the drive spindle; and said virtual cutting ring having an outer diameter cutting edge, an inner diameter cutting edge and a middle cutting edge therebetween, the virtual cutting ring being sized in a width greater than a thickness of the open end of the cup shaped body to permit the virtual cutting ring in a multi-axis simultaneous motion, to machine the airfoils using the respective cutting edges.

In another aspect, the present invention provides a cup milling cutter for machining a rotor having a disc and a plurality of integral airfoils projecting outwardly from the disc, which comprises a cup shaped body attachable to a drive spindle of a milling machine for rotation about an axis of the drive spindle, the cup shaped body including a plurality of circumferentially spaced teeth integrated therewith at an open end of the cup shaped body; a plurality of cutting inserts; means for removeably attaching the cutting inserts to the individual teeth of the cup shaped body to form a virtual cutting ring about the axis of rotation when the cup shaped body is rotated by the drive spindle; and said virtual cutting ring having an outer diameter cutting edge, an inner diameter cutting edge and a middle cutting edge therebetween, the virtual cutting ring having an outer diameter thereof greater than an outer diameter of the open end of the cup shaped body and having an inner diameter thereof smaller than an inner diameter of the open end of the cup shaped body, to permit the virtual cutting ring in a multi-axis simultaneous motion, to machine the airfoils using the respective cutting edges.

In another aspect, the present invention provides a method for machining a rotor having a disc and a plurality of integral airfoils projecting outwardly from the disc, which comprises a step of machining each airfoil with a cup milling cutter having a virtual cutting ring thereof including an outer diameter cutting edge, an inner diameter cutting edge and a middle cutting edge therebetween, adapted for removing material from the airfoils, the virtual cutting ring being formed by a plurality of cutting inserts attached to the cup milling cutter when in operation and having a width greater than a thickness of an adjacent supporting portion of the cup milling cutter in order to permit the virtual cutting ring to pass a surface of an airfoil in a multi-axis simultaneous motion, thereby dynamically matching a selected one of the cutting edges of the virtual cutting ring with a predetermined geometry of a portion of the airfoil.

Further details of these and other aspects of the present invention will be apparent from the detailed description and figures included below.

### DESCRIPTION OF THE DRAWINGS

Reference is now made to the accompanying figures depicting aspects of the present invention, in which:
Figure 1 is a cross-sectional view of a cup milling cutter, in rotation forming a virtual cutting ring at an open end of a cup shaped body, according to one embodiment of the present invention;
Figure 2 is a partial side elevational view of the cup milling cutter of Figure 1, showing the physical configuration of the open end of the cup shaped body which in rotation forms the virtual cutting ring;
Figure 3 is a partial schematic illustration of a cup milling cutter according to another embodiment of the present invention, showing a cup shaped body thereof having a diametrical dimension of an open end thereof, larger than that of a closed end of the cup shaped body;
Figure 4 is a cup milling cutter according to a further embodiment of the present invention, showing a cup shaped body having an open end thereof diametrically smaller than a closed end of the cup shaped body;
Figure 5 is a schematic illustration of an integral bladed rotor (IBR) airfoil machining process, showing an example of machining of a pressure side of an airfoil using the cup milling cutter of the present invention;
Figure 6 is schematic illustration of an IBR airfoil machining process, showing an example of machining of a suction side of an airfoil using the cup milling cutter of the present invention;
Figure 7 is a partial perspective view of a cup milling cutter according to another embodiment of the present invention, showing cassettes to be used to secure inserts to the cup shaped body;
Figure 8 is a side elevational view of an insert used in the cup milling cutter of Figure 7;
Figure 9 is a perspective view of the cassette used in the cup milling cutter of Figure 7;
Figure 10 is a partial side elevational view of a cup milling cutter according to yet another embodiment of the present invention, showing a cassette attached to the cup shaped body, alternative to the arrangement for attaching the cassettes to the cup shaped body in Figure 7;
Figure 11 is a partial perspective view of a cup milling cutter according to another embodiment of the present invention, showing the inserts being attached directly to the cup shaped body in different radial positions;
Figure 12 is a partial perspective view of a cup milling cutter according to yet another embodiment of the present invention, showing an insert attached directly to a cup shaped body in a resilient self-gripping configuration;
Figure 13 is a perspective view of an insert used in the cup milling cutter of Figure 12;
Figure 14 is a cross-sectional view of the cup milling cutter of Figure 1, taken along line 14-14 with a cover plate being removed to show a central portion of a cooling passage network defined in the cup shaped body of the cup milling cutter;
Figures 15A-15C are schematic illustrations showing the cutting ring having different cross sections depending on the shape of the insert, as following: circular insert, star insert or costumer insert;
Figure 16 is a partial perspective view of an IBR showing the characteristics of its blades;
Figure 17 is a partial perspective view of a tooth of a cup milling cutter and the insert installed on it, showing the tooth slot and the insert log which allow the control of the radial position of the insert on the cup mill cutter;
Figure 18 is a partial perspective view of a cup milling cutter using cassettes and having the possibility to adjust the radial position of the cassette, thus of the insert;
Figure 19 is a partial perspective view of the cup milling cutter showing two consecutive inserts, one with the cutting edge on the outer diameter and another one with the cutting edge on the inner diameter of the cutting ring of the cup mill cutter; and
Figure 20 is a partial axial view of the cup milling cutter showing the open end of the cup milling cutter.

### DETAILED DESCRIPTION OF THE PREFERRED EMBODIMENTS

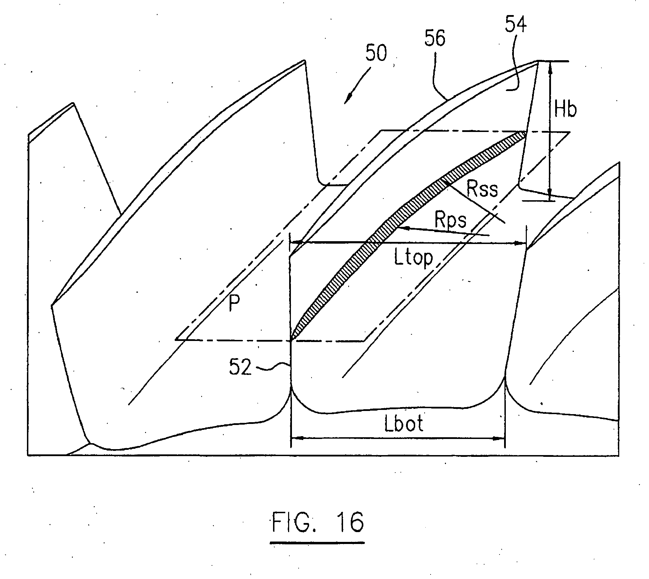

Referring to Figure 16, an integrated bladed rotor (IBR) 50 of a gas turbine engine is generally characterized by the depth of the slot (Hb); the opening between two airfoils 52 having different width in the top and in the bottom (Ltop and Lbot); a concave pressure side 54 having the profile (Rps) in a cross section (P); and a convex suction side 56 with the profile (Rss) in the cross section (P).

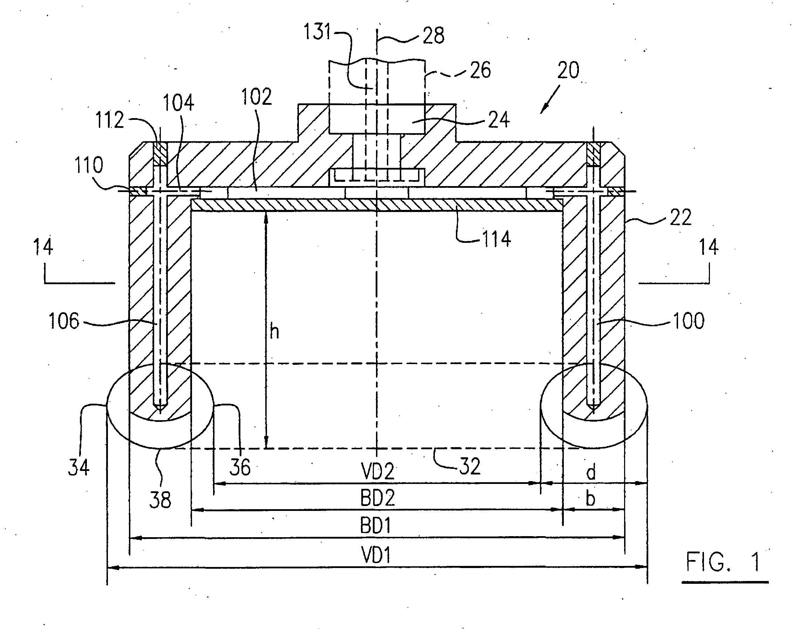

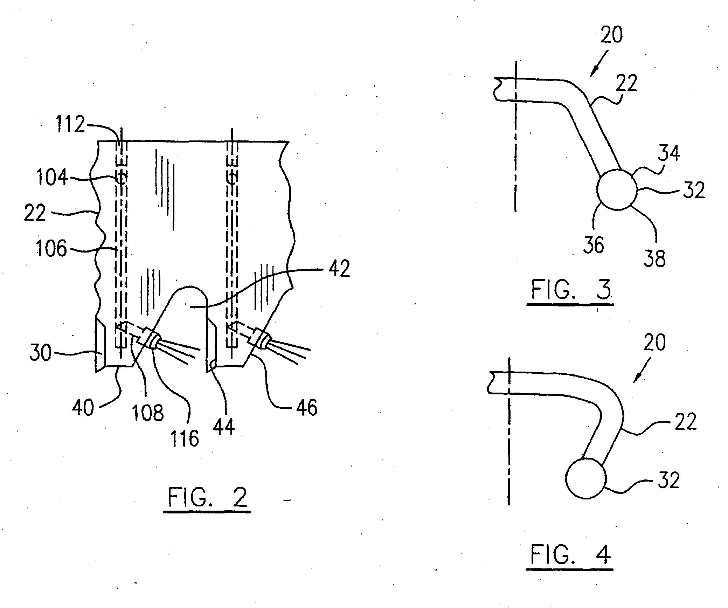

Referring to Figures 1 and 2, a cup milling cutter for machining integrated bladed rotor (IBR) airfoils according one embodiment of the present invention is indicated by numeral 20. The cup milling cutter 20 generally includes a cup shaped body 22 having an open end (not indicated) and a closed end (not indicated) defining a central opening 24, adapted to be attached to a drive spindle 26 of a milling machine (not shown) for rotation about an axis 28 of the drive spindle 26. A plurality of cutting inserts 30 (see Figure 2), are removably attached to the cup shaped body 22, spaced apart one from another along the circumference of the open end of the cup shaped body 22 to form a virtual cutting ring 32 about the axis 28 at the open end of the cup shaped body 22 when the cup shaped body 22 is rotated by the drive spindle 26.

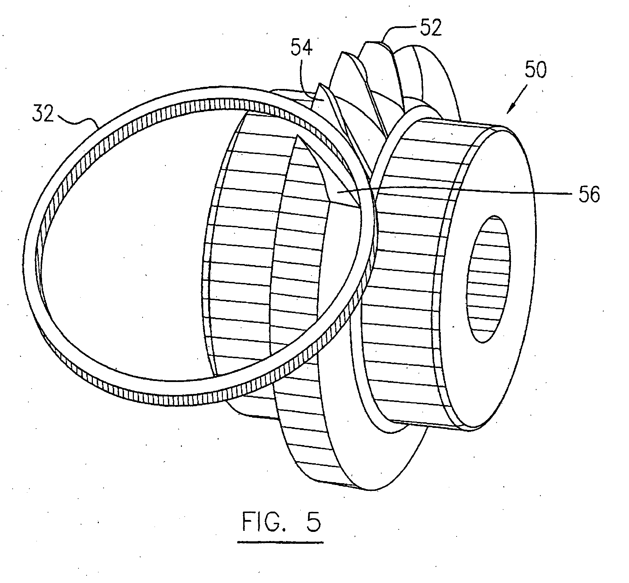

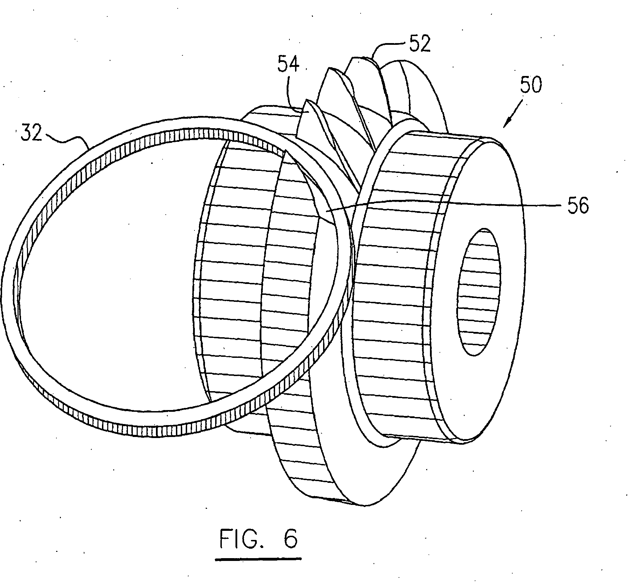

The virtual cutting ring 32 has an outer diameter cutting edge 34, inner diameter cutting edge 36 and a middle cutting edge 38 therebetween. The virtual cutting ring 32 is sized in a width d greater than a thickness b of the open end of the cup shaped body 22 and smaller than the width Lbot and the width Ltop of the slot of the IBR 50 (see Figure 16), to permit the virtual cutting ring 32 in a multi-axis simultaneous motion, to machine airfoils 52 (see Figures 5 and 6) using the respective cutting edges 34, 36 and 38 without interference. Preferably, the virtual cutting ring 32 has an outer diameter VD1 greater than an outer diameter BD1 of the open end of the cup shaped body 22. It is also preferable that the virtual cutting ring 32 has an inner diameter VD2 smaller than an inner diameter BD2 of the open end of the cup shaped body 22 (see Figures 1, 19 & 20).

Referring to Figures 1 and 16, the cup depth h of the cup shaped body 22 has to be greater than the depth Hb of the IBR slot (see Figure 16). The cup shaped body 22 according to this embodiment is configured with a plurality of teeth 40 defined at the open end of the cup shaped body 22, positioned between adjacent axial recesses 42 (only one shown in Figure 2). Each tooth 40 has a front face 44 and a back face 46 in series of the circumferential direction of the open end of the cup shaped body 22. The front face 44 is configured for positioning one of the cutting inserts 30. The insert, which generatres the cutting ring has to be capable to cut in the axial direction for plunging (axial feed) and in the radial direction with OD and with ID for the radial feed. Each of the cutting inserts 30 includes at least three cutting edges and is sized appropriately such that the three cutting edges of the respective cutting inserts 30 form the outer and inner diameter cutting edges 34, 36 and the middle cutting edge 38 of the virtual ring 32 when the cup milling cutter 20 is in use. The teeth 40 of the cup shaped body 22 can be circumferentially equally spaced apart one from another. However, the teeth 40 and thus cutting inserts 30 can also be circumferential unevenly spaced one from another, creating a variable pitch cutter. For example, at least one of the axial recesses 42 can be smaller or larger than the other recesses 42. This uneven pattern of the cutting insert distribution can be used when a potential vibration resonance caused by the cutting forces is to be avoided.

Referring to Figures 1, 3 and 4, the cup shaped body 22 can be configured substantially in a cylindrical shape as shown in Figure 1. However, the cup shaped body 22 can also be configured in a substantially truncated conical shape, having either an open end thereof with a diameter greater than that of the closed end as shown in Figure 3, or an open end with a diameter smaller than that of the closed end as shown in Figure 4, providing convenience of machining IBR airfoils having particular geometries.

Referring to Figures 5 and 6, the virtual cutting ring 32 of a cup milling cutter 20 is used as an example to generally illustrate an operation of machining airfoils 52 of an integrated bladed rotor (IBR) 50 using the present tool. The cup milling cutter 20 of the present invention can be used in various machining processes of an IBR 50 such as a roughing or semi-finishing of the airfoils 52 in different feeding directions, for example, by entering the airfoils 52 in a substantially radial direction with respect to the IBR 50 or in a substantially axial direction with respect to the IBR 50. During any of these machining processes the cup milling cutter 20 in rotation can be used to cut axially using the middle cutting edge 38 (plunging), or radially (using the outer and inner diameter cutting edges 34 and 36 or a combination of them) in a simultaneous motion of up to 5 degrees of freedom, including three translational motions and two angular motions to match a specific geometry of a surface of one airfoil 52.

It is convenient and advantageous to use different cutting edges 34, 36, 38 of the virtual cutting ring 32 of the cup milling cutter 20 to machine the respective concave airfoil pressure side 54 and convex airfoil suction side 56. For example, it is convenient to machine the concave airfoil pressure side 54 using the outer cutting edge 34 of the virtual cutting ring 32 of the cup milling cutter 20 (see Figure 5), which possess the outer diameter VD1 (see Figure 1) forming a convex arc in a circumferential direction of the cup milling cutter 20. In contrast to the concave airfoil pressure side 54, the airfoil suction side 56 is convex and is thus conveniently machined using the inner cutting edge 36 of the virtual cutting ring 32 of the cup milling cutter 20 (see Figure 6), which presents an inner diameter VD2 (see Figure 1) forming a concave arc in the circumferential direction of the cup milling cutter 20.

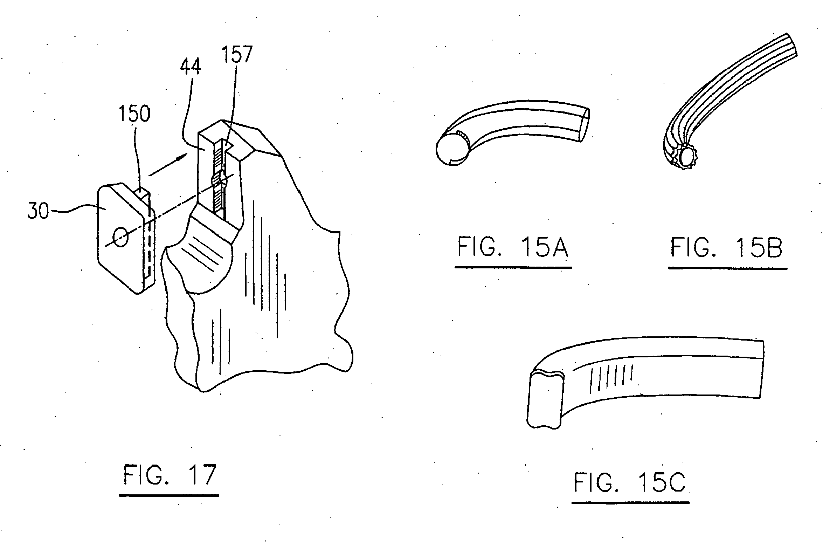

In Figures 1 and 2 the virtual cutting ring 32 of the cup milling cutter 20 of the present invention can be formed by cutting inserts 30 of various types such that the cross-section of the virtual cutting ring 32 may present various shapes, such as round, elliptic, square, rectangular, etc. Three examples are shown in Figure 15A, 15B and 15C, namely a circular insert, a star insert and a custom-shaped insert (the inserts are depicted as virtual rings to illustrate the effective cutting surface achieved). The cutting inserts 30 can be made from various materials such as carbide, ceramic, etc. Instead of directly affixing cutting inserts 30 to the cup shaped body 22 of the cup milling cutter 20, means such as cassettes for removably attaching the cutting inserts 30 to the individual teeth 40 of the cup shaped body 22 may be used.

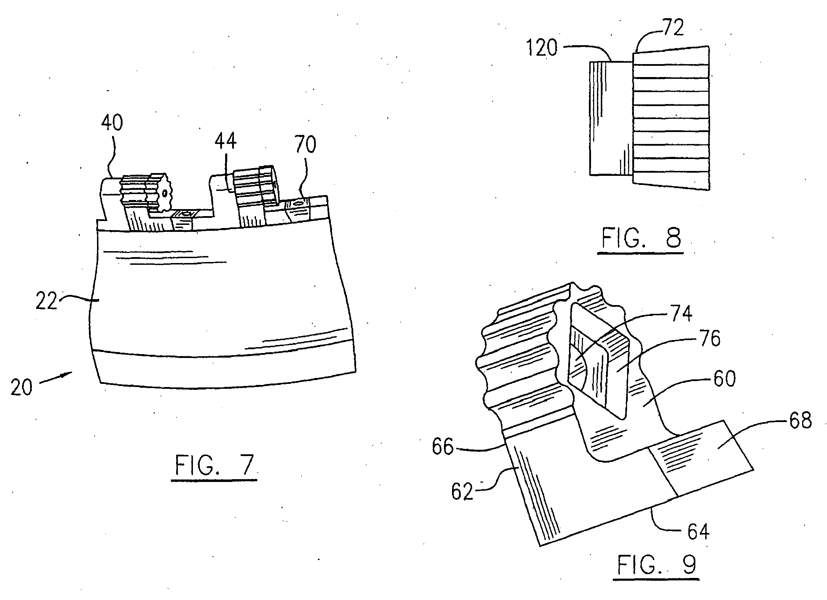

Referring to Figures 1, 7-9, an alternative arrangement for cutting insert attachment according to another embodiment of the present invention is described herein. A plurality of cassettes 60 is provided. Each cassette 60 includes an L-shaped body 62 having first and second arms 64, 66 in a substantially perpendicular relationship. The first arm 64 is rested on the radial end surface of the open end of the cup shaped body 22 while the second arm 66 is rested on the front surface 44 of the tooth 40. The first arm 64 preferably has a tapered end surface 68 for matching with a tapered mounting block 70 such that when the cassette 60 is placed in position with respect to the cup shaped body 22 as illustrated in Figure 7, the tapered block 60 can be mounted to the open end of the cup shaped body 22, for example by screws (not shown), to secure the attachment of the body 62 to the cup shaped body 22. It is preferable to have means provided between the cup shaped body 22 and the body 62 for accurately positioning the individual body 62 such that all cassettes 60 are attached to the cup shaped body 22 in a same radial distance with respect to axis 28. Any known or new positioning means can be used for this purpose. One example thereof will be described with reference to a further embodiment of the present invention.

The body 62 is adapted to carry, for example, a cutting insert 72 which can be selected from any desired configuration such as the one illustrated in Figure 8. The body 62 has a mounting hole 74 extending through the second arm 66 for receiving a mounting screw (not shown) therethrough when the cutting insert 72 is attached to an inner surface of the second arm 66 and fastened by said mounting screw. Preferably, positioning means such a recess 76 is defined in the second arm 66 of the body 62 to receive a positioning element 120 of the cutting insert 72 in order to ensure an accurate position of the cutting insert 72 with respect to the cassette 60 and thus the cup shaped body 22 of the cup milling cutter 20.

The width of the body 62 is equal to the thickness of the open end of the cup shaped body 22. The dimensions of the body 62 and the cutting insert 72, as well as the positioning relationship between the cassette 60 and the cutting insert 72, are arranged such that the cutting edges of the individual cutting inserts 72 are fully exposed to form the virtual cutting ring 32 when the assembled cup milling cutter 20 is in operation, meeting with all requirements of the virtual cutting ring 32 according to the present invention.

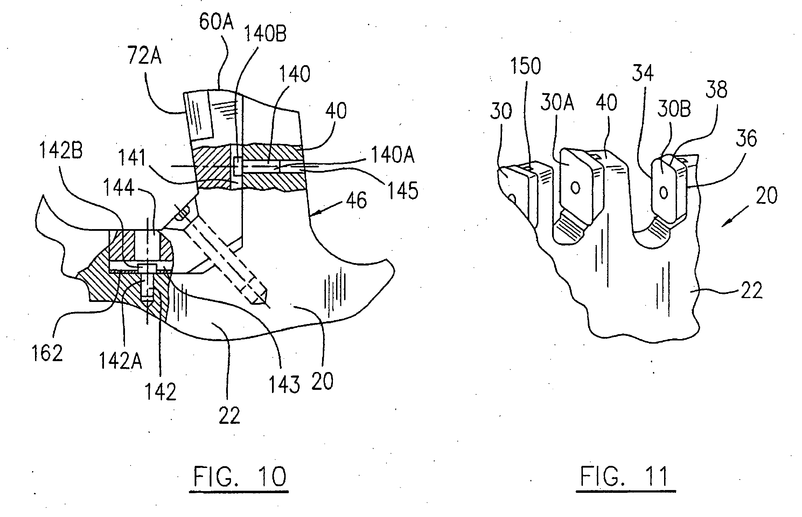

Figure 10 illustrates another embodiment of the present invention in which cassettes 60A are used to attach cutting inserts 72A to individual teeth 40 of the cup shaped body 22 of the cup milling cutter 20. However, the configuration thereof is alternative to the embodiment illustrated in Figures 7-9 as is apparent from the illustration of Figure 10. In particular, the mounting bolt (not indicated) is angularly positioned with respect to both support faces on which the L-shaped arms of the cassette 60A rest.

Referring to Figures 1 and 11, the cup milling cutter 20 has a configuration according to another embodiment of the present invention, similar to that of the embodiment shown in Figure 2, in which the plurality of cutting inserts 30 are attached directly to the teeth 40 of the cup shaped body 22, for example, by mounting screws (not indicated). The difference between the configurations shown in Figures 2 and 11 is that the cutting inserts 30 (including 30A and 30B) of Figure 11 are attached to the individual teeth 40 of the cup shaped body 22 in different radial positions with respect to the rotational axis 28, but in the same axial position. For example, some cutting inserts (represented by 30A) are attached to their respective mounting teeth 40 in a relatively outer radial position and the remaining cutting inserts (represented by 30B) are attached to their respective mounting teeth 40 in a relatively inner radial position. When the cup milling cutter 20 is in operation, the outer cutting edges of only those cutting inserts 30A which are in a radially outer position, form the outer cutting edge 34 of the virtual cutting ring 32, while the inner cutting edges of only those cutting inserts 30B which are in a radially inner position, form the inner diameter cutting edge 36 of the virtual cutting ring 32. Therefore, the width of the virtual cutting ring 32 is determined by the relative radial positions of the respective groups of cutting inserts 30A and 30B rather than the width of every individual cutting inserts 30, as in Figure 2. The cup milling cutter 20 has an equal number of inserts 30A and 30B mounted alternatively on the cup shaped body 22 in order to obtain an uniform cutting load during the operation.

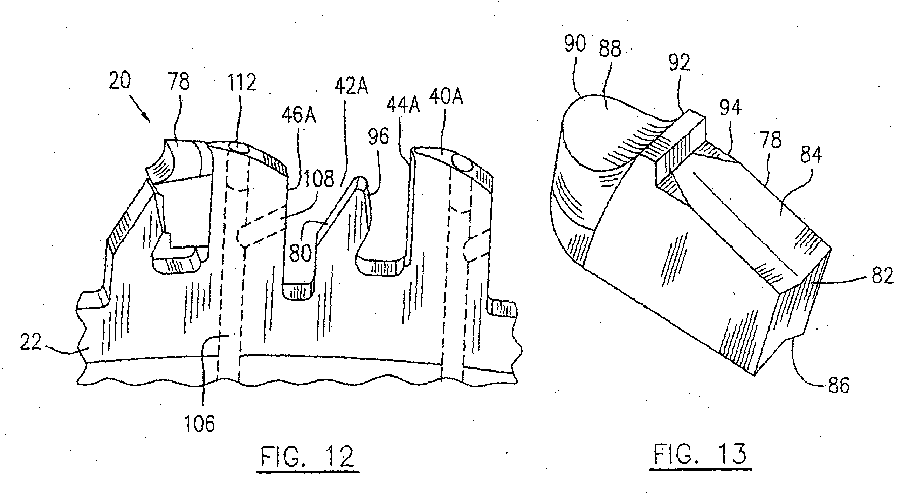

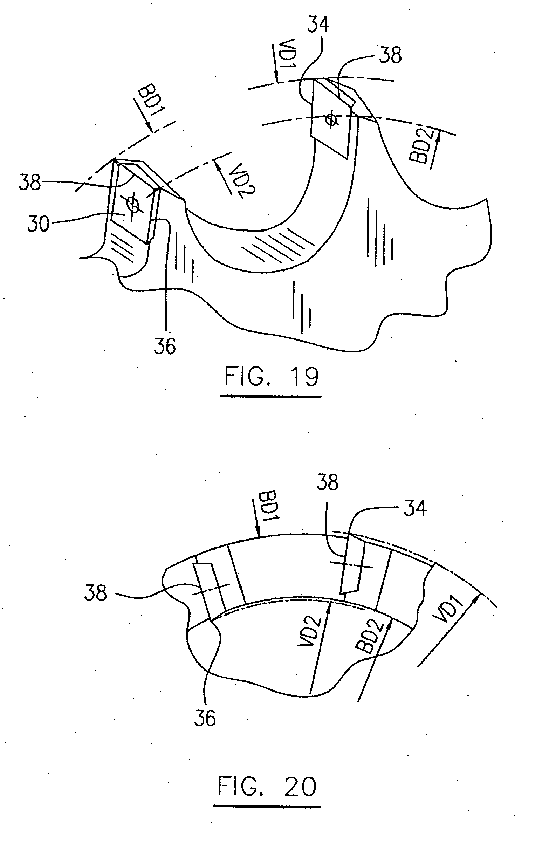

Known and new positioning means (not shown) are provided to ensure the two of different radial positions of the respective groups of cutting inserts 30A and 30B. One such positioning means will be described with reference to Figures 12 and 13. This principle of positioning cutting inserts radially differently to form a virtual cutting ring having a width thereof larger than the width of the individual cutting inserts, is also applicable to those embodiments using cassettes to attach the cutting inserts to the cup shaped body. In Figures 11 and 17 is illustrated an embodiment on which the positioning means consist in a slot 157 created into the front face 44 of the mounting tooth 40, in which fits-in a log 150 of the insert 30. In Figures 19 and 20 is shown another embodiment on which, the radial position of the insert is controlled by a step created on the font face of the mounting teeth at one side of the insert (inside step for the inserts working with outside cutting edge 34 and outside step for inserts working with the inside cutting edge 36). In both situations the radial position of each insert is controlled, but not adjustable.

Especially for cup milling cutters using cassettes, means to adjust the radial position of the insert's cutting edge may be used. One example of such means are illustrated in Figure 10. Two pins 140 and 142, having a cylindrical portion 140A and 142A slide fit into the mounting tooth 40 and another cylindrical portion 140B and 142B eccentrically positioned in relation to 140A and 142A, which is slide fit into a slot of the cassette 141 and 143. By rotating these pins 140 and 142 at different angular positions, the cassette radial position will be different. In this way, the radial position of each insert 72A may be adjusted. In order to rotate the pin 140, the hole 145 goes through the mounting tooth 40 and the access to the pin is from the rear face 46 of the tooth. For the pin 142, the access for adjustment has to be from the open end of the cup shaped body 22, by the hole 144 of the cassette 60A. Both pins 140, 142 have means to receive a screw-driver on the free end 140A (for 140 pin) and on the free face 142B (for the pin 142).

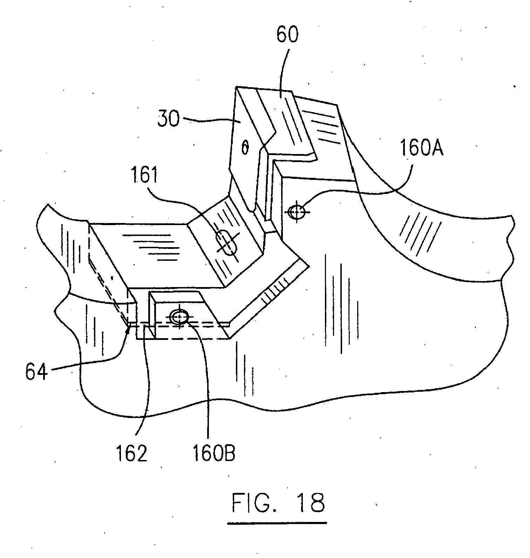

In Figure 18 is shown another embodiment of the radial adjustment of the cassette, using two set-screws 160A and 160B. This system may be used for the inserts working with the outer cutting edge 34, aligned on the outside diameter, as well as for the inserts working with the inner cutting edge 36 aligned on the inside diameter of the cutting ring 32. The screw hole 161 is preferably elongate to allow such radial adjustment of the cassette when a mounting screw is received in the screw hole 161.

Also, means to adjust the insert axial position may be used in order to align the middle cutting edge 38 of the cutter. In Figure 10 and 18 these means to adjust the axial position of the insert consist in some shims 162 placed between the cup shaped body and the cassette.

Referring to Figures 1, 12-13, in a further embodiment of the present invention, the cup shaped body 22 of the cup milling cutter 20 includes a plurality of teeth 40A at the open end thereof and a plurality of cutting inserts 78 attached to the respective teeth 40A. A plurality of axial recesses are thus defined between a front surface 44A and a back surface 46A of the respective adjacent teeth 40A. The cup milling cutter 20 further includes a resilient self-gripping configuration of each of the teeth 40A for securely affixing a cutting insert 78 against cutting forces during operation. The resilient self-gripping configuration is provided with a gripping finger 80 which is integrated with the open end of the cup shaped body 22 and which axially protrudes into the axial recess 42A to resiliently press the cutting insert 78 against the front surface 44A of an adjacent tooth 40A. The finger 80 is configured such that a desired and limited resiliency is obtained to allow the gripping finger 80 to be slightly resiliently deformable in the circumferential direction of the cup shaped body 22 while being rigid enough to hold the cutting insert 78 in position against cutting and impact forces during operation.

The cutting insert 78 generally includes a body portion 82 having inwardly recessed front and rear faces 84, 86 and a cutting portion 88 which is configured as a rounded end of the cutting insert 78 having a substantially continuous curved cutting edge 90 at the front face thereof. A shoulder 92 is provided between the cutting portion 88 and the body portion 82, protruding outwardly from the inwardly recessed front face 84. The inwardly recessed front face 84 also tapers from the shoulder 92 towards the end thereof such that the body portion 82 presents in a truncated shape in a side view thereof. The inwardly recessed front face 84 is further configured with a pair of cut-off areas 94 located at the opposite sides thereof immediately adjacent the shoulder 92.

The front surface 44A of the tooth 40A extends substantially axially to form a projecting profile to match the inwardly recessed rear face 86 of the body portion 82 of the cutting insert 78. The gripping finger 80 includes a contacting surface 96 extending angularly with respect to the axial front surface 44A of the tooth 40A and is configured with a projecting profile to match the tempering and inwardly recessed front face 84 of the body portion 82 of the cutting insert 78. For attachment of the cutting insert 78 to the tooth 40A of the cup shaped body 22, the body portion 82 of the cutting insert 78 is inserted as a wedge, into a space (not indicated) defined between the front surface 44A of the tooth 40A and the contacting surface 96 of the gripping finger 80 and held on the cup shaped body 22 by the gripping force created by the gripping finger 80 tensioned when the insert is pushed in. When the cutting insert 78 reaches a certain point, an insertion force is required to push the cutting insert 78 further downwards, forcing the gripping finger 80 to be resiliently displaced backwardly until the shoulder 92 of the cutting insert 78 rests on the end of the gripping finger 80. The taper angle between the surfaces 44A and 96 (of the cup shaped body) and the faces 84 and 86 (of the insert) has to be smaller than 5 degrees, in order to lock the insert in, by creating an automatic interlock force (auto-interlock force). The cutting insert 78 is securely attached to the tooth 40A of the cup shaped body 22 by the gripping finger 80 as a wedge. In order to put in or put out the cutting insert 78 into the cup shaped body 22, it has to be pushed in or out by applying an axial force with respect to the cup shaped body. A special tool (not shown) may be used which is not a part of the present invention.

During operation, the curved continuous cutting edge 90 of the cutting portion 88 of all the cutting inserts 78 forms the virtual cutting ring 32. Therefore, it is preferable that the width of the body portion 82 of the cutting insert 78 is not larger that the thickness of the open end of the cup shaped body 22 of the cup milling cutter 20, and that the cutting portion 88 of the cutting insert 78 is wider than the body portion 82.

By the "V" shape of the faces 84 and 86 of the insert and the surfaces 44A and 96 of its site, the radial position of the insert with respect to the longitudinal axis of the cup mill cutter is very easy to control. This kind of self-grip system may be used for semi-finishing the IBR's airfoils. These inserts may be installed in the same radial position, all of them having their cutting edge 90 lying entirely on the tool cutting ring. The cutting edge 90 may have different shapes, not necessary a circular one.

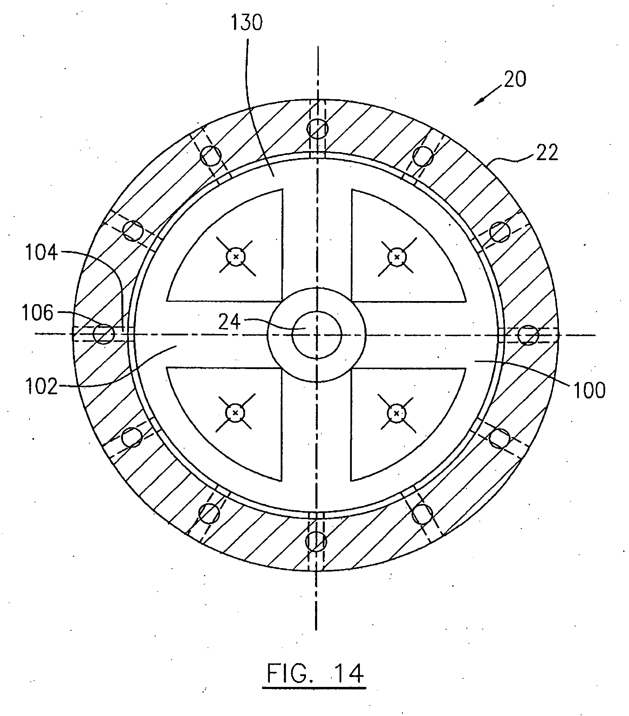

In accordance with another aspect of the present invention, the cup milling cutter 20 can be provided with a coolant system as illustrated in Figures 1, 2, 12 and 14. The coolant system includes a coolant passage network 100 for directing coolant flows to individual cutting inserts 30 or 78 (which are examples but do not limit types of cutting inserts) during a cutting operation of the cup milling cutter 20.

The coolant passage network 100 includes a plurality of grooves 102 defined in an inner side (not indicated) of the closed end of the cup shaped body 22 and extending radially outwardly from the central opening 24 and ending into a circular collector groove 130. The collector groove 130 is in communication with a plurality of bores 104 (one for each tooth), which extend radially and inwardly from the outer periphery at the closed end of the cup shaped body 22 to terminate at the collector groove 130. A plurality of bores 106 are provided, each extending axially from an outer face of the closed end of the cup shaped body 22, into a side wall (not indicated and cylindrical in this embodiment) thereof, preferably therethrough and exiting at the open end of the cup shaped body 22, for example, at each tooth 40A (see Figure 12), for the convenience of a drilling process. The axial bores 106 intersect the individual radial bore sections 104 as shown in Figure 1. Furthermore, each of the axial bores 106 is intersected by an injection bore 108 (see Figures 2 and 12) which extends from the back surface 46 or 46A into the tooth 40 or 40A. The injection bore 108 is oriented in a direction for injecting a coolant flow therethrough towards the cutting insert 30 or the cutting portion 88 of the cutting insert 78 attached to the adjacent tooth 40 or 40A, during a cutting operation.

The outer openings (not indicated) of the individual radial bore sections 104 are blocked by plugs 110 and the axial bores 106 are also plugged at the open end (or at both opposite open ends if bores 106 extend through the cup shaped body 22) by plugs 112. A plate 114, is provided to be fittedly attached to the cup shaped body 22 at the inner face thereof to entirely cover the plurality of grooves 102 and the central opening 24 of the cup shape body 22. Therefore, the grooves 102 and the bores 104, 106 and 108 in combination form the coolant passage network 100 which is enabled to receive a coolant flow delivered through a central passage 131 incorporated into the drive spindle 26, and to deliver coolant to each tooth 40 of the cup shaped body 22 and further to inject coolant into a cutting insert 30 or 78 attached to the next adjacent tooth. If desirable, a nozzle device 116 (see Figure 2) preferably adjustable for flow rate, is installed in each injection bore 108.

The above description is meant to be exemplary only, and one skilled in the art will recognize that changes may be made to the embodiments described without departure from the scope of the invention disclosed. For example, although most alternative configurations of the cup milling cutter of the present invention are described based on a cylindrical cup shaped body, other configurations can be also be applied to the truncated conical cup shaped body. Still other modifications which fall within the scope of the present invention will be apparent to those skilled in the art, in light of a review of this disclosure, and such modifications are intended to fall within the appended claims.

## Claims

1. A cup milling cutter (20) for machining a rotor (50) having a disc and a plurality of integral airfoils (52) projecting outwardly from the disc, the cup milling cutter (20) comprising:
a cup shaped body (22) attachable to a drive spindle of a milling machine for rotation about an axis of the drive spindle;
a plurality of cutting inserts (30; 72; 72A; 78) removeably attached to the cup shaped body (22) to form a virtual cutting ring (32) about the axis of rotation at an open end of the cup shaped body (22) when the cup shaped body (22) is rotated by the drive spindle; and
said virtual cutting ring (32) having an outer diameter cutting edge (34), an inner diameter cutting edge (36) and a middle cutting edge (38) therebetween, the virtual cutting ring (32) being sized in a width (d) greater than a thickness (b) of the open end of the cup shaped body (22) to permit the virtual cutting ring (32) to machine the airfoils (52) using the respective cutting edges (34, 36, 38).

2. The cup milling cutter as defined in claim 1 wherein the cup shaped body (22) comprises a coolant passage network (100) for directing coolant flows to individual cutting inserts (30; 72; 72A; 78) during a cutting operation.

3. The cup milling cutter as defined in claim 2 wherein at least a section of the coolant passage network (100) comprises a groove (102) defined in the cup shaped body (22) and covered by a piece of sheet metal (114).

4. The cup milling cutter as defined in claim 2 or 3 wherein the cooling passage network (100) comprises a plurality of nozzles (116) located in individual positions to permit each nozzle to inject a coolant flow onto one cutting insert (30; 72; 72A; 78) in a cutting zone.

5. The cup milling cutter as defined in any preceding claim wherein the cutting inserts (30; 72; 72A; 78) are circumferentially spaced apart one from another in an uneven pattern along the virtual cutting ring (32).

6. The cup milling cutter as defined in any preceding claim wherein the cup shaped body (22) comprises means for radially positioning the individual cutting inserts (72A) with respect to the axis of rotation.

7. The cup milling cutter as defined in claim 6 wherein the cutting inserts (72A) are radially positioned such that at least one of the cutting inserts (72A) forms the outer diameter cutting edge (34) of the virtual cutting ring (32) and such that at least one of the cutting inserts (74A) forms the inner diameter cutting edge (36) of the virtual cutting ring (32).

8. A cup milling cutter (20) for machining a rotor (50) having a disc and a plurality of integral airfoils (52) projecting outwardly from the disc, the cup milling cutter (20) comprising:
a cup shaped body (22) attachable to a drive spindle of a milling machine for rotation about an axis of the drive spindle, the cup shaped body (22) including a plurality of circumferentially spaced teeth (40; 40A) integrated therewith at an open end of the cup shaped body (22);
a plurality of cutting inserts (30; 72; 72A; 78);
means for removeably attaching the cutting inserts (30; 72; 72A; 78) to the individual teeth (40) of the cup shaped body to form a virtual cutting ring (32) about the axis of rotation when the cup shaped body (22) is rotated by the drive spindle; and
said virtual cutting ring (32) having an outer diameter cutting edge (34), an inner diameter cutting edge (36) and a middle cutting edge (38) therebetween, the virtual cutting ring (32) having an outer diameter (VD1) thereof greater than an outer diameter (BD1) of the open end of the cup shaped body (22) and having an inner diameter (VD2) thereof smaller than an inner diameter (BD2) of the open end of the cup shaped body (22), to permit the virtual cutting ring (32) to machine the airfoils (52) using the respective cutting edges (34, 36, 38).

9. The cup milling cutter as defined in claim 8 wherein the means comprises a plurality of fasteners securing the cutting inserts (30; 72; 72A) seated on the individual teeth (40).

10. The cup milling cutter as defined in claim 8 wherein the means comprises a resilient self-gripping configuration for securely affixing a cutting insert (78) to each of the teeth (40A) against cutting forces during operation.

11. The cup milling cutter as defined in claim 10 wherein the self-gripping configuration comprises a plurality of gripping fingers (80), each integrated with the cup shaped body (32) and protruding into a recess (42A) defined between two adjacent teeth (40A) for resiliently holding one of the cutting inserts (78) against a front surface (44A) of one of the adjacent teeth (40A).

12. The cup milling cutter as defined in claim 11 wherein each of the cutting inserts (78) comprises positioning elements for respectively positioning the cutting insert (78) radially and axially with respect to the cup shaped body (32).

13. The cup milling cutter as defined in claim 8 or 9 wherein the means comprises a plurality of cassettes (60; 60A), each securing a cutting insert (72A) thereto and adapted to be affixed to one of the teeth (40).

14. The cup milling cutter as defined in claim 13 wherein each of the cassettes (60; 60A) comprises a substantially L-shaped body (62).

15. The cup milling cutter as defined in any preceding claim wherein the cup shaped body (22) is substantially cylindrical.

16. The cup milling cutter as defined in any of claims 1 to 14 wherein the cup shaped body (22) is substantially truncatedly conical.

17. A method for machining a rotor (50) having a disc and a plurality of integral airfoils (52) projecting outwardly from the disc, the method comprising a step of machining each airfoil (52) with a cup milling cutter (30) having a virtual cutting ring (32) thereof including an outer diameter cutting edge (34), an inner diameter cutting edge (36) and a middle cutting edge (38) therebetween, adapted for removing material from the airfoils (52), the virtual cutting ring (32) being formed by a plurality of cutting inserts (30; 72; 72A; 78) attached to the cup milling cutter (20) when in operation and having a width greater than a thickness of an adjacent supporting portion of the cup milling cutter (20) in order to permit the virtual cutting ring (32) to pass a surface of an airfoil (52) in a multi-axis simultaneous motion, thereby dynamically matching a selected one of the cutting edges of the virtual cutting ring (32) with a predetermined geometry of a portion of the airfoil (52).

18. The method as defined in claim 17 comprising a step of machining a concave side (54) of the individual airfoils (52) with the outer diameter cutting edge (34) of the virtual cutting ring (32) in a multi-axis simultaneous motion.

19. The method as defined in claim 17 or 18 comprising a step of machining a convex side (56) of the individual airfoils (52) with the inner diameter cutting edge (36) of the virtual cutting ring in a multi-axis simultaneous motion.

20. The method as defined in claim 17, 18 or 19 comprising the step of adjusting at least one of the radial and axial positions of respective cutting inserts (72A) relative to the cup milling cutter (20), thereby selectively adjusting the respective outer diameter cutting edge (34), inner diameter cutting edge (36) and middle cutting edge (38) of the virtual cutting ring (32).
